# EUROPEAN PATENT APPLICATION

(11) **EP 4 597 663 A1**
(43) Date of publication of application: **06.08.2025**
(21) Application number: 23871626.0
(22) Date of filing: 28.08.2023
(51) Int. Cl.: H01M 10/052, H01M 4/36, H01M 4/48, H01M 4/505, H01M 4/525, H01M 4/587

(54) **NONAQUEOUS ELECTROLYTE SECONDARY BATTERY**

(30) Priority: 30.09.2022 JP 2022158179
(71) Applicant: Panasonic Intellectual Property Management Co., Ltd., Kadoma-shi, Osaka 571-0057 (JP)
(72) Inventor: FUJITANI, Naoya, Kadoma-shi, Osaka 571-0057 (JP); AOKI, Yoshinori, Kadoma-shi, Osaka 571-0057 (JP); INOUE, Katsuya, Kadoma-shi, Osaka 571-0057 (JP); OGASAWARA, Takeshi, Kadoma-shi, Osaka 571-0057 (JP)
(74) Representative: Novagraaf International SA
(86) International application number: PCT/JP2023/030867
(87) International publication number: WO 2024/070385

(57) **Abstract**

With respect to a nonaqueous electrolyte secondary battery (10) according to one example embodiment of the present invention, a positive electrode (11) contains, as a positive electrode active material, a lithium transition metal composite oxide that has a layered structure and contains not less than 75 mol% of Ni with respect to the total molar quantity of metal elements excluding Li. The lithium transition metal composite oxide is in the form of secondary particles that are obtained by aggregation of primary particles; and at least one element selected from the group consisting of Ca and Sr, and at least one element selected from the group consisting of W, Mo, Ti, Si, Nb and Zr are present at the interfaces between the primary particles inside the secondary particles. A negative electrode (12) contains, as a negative electrode active material, a silicon-containing material.

## Description

### TECHNICAL FIELD

The present disclosure relates to a non-aqueous electrolyte secondary battery.

### BACKGROUND ART

Non-aqueous electrolyte secondary batteries such as lithium-ion batteries have been widely used in recent years for usage requiring high capacity, high durability, quick charge-discharge performance, and the like, such as on-board use and power storage use. For example, Patent Literature 1 discloses a non-aqueous electrolyte secondary battery including: a silicon-containing material represented by SiOₓ (0.5 ≤ x ≤ 1.6) as a negative electrode active material; propylene carbonate and diethyl carbonate as a solvent of an electrolyte liquid; and LiBF₄ as a salt of the electrolyte liquid. Patent Literature 1 describes that a good solid electrolyte interphase (SEI) coating is formed on a negative electrode.

### CITATION LIST

### PATENT LITERATURE

PATENT LITERATURE 1: Japanese Unexamined Patent Application Publication No. 2016-143642

### SUMMARY

In the non-aqueous electrolyte secondary battery such as the lithium-ion battery, the capacity typically decreases with repeated charge and discharge, and it is an important challenge to reduce an extent of this decrease in the capacity. Improvement of a positive electrode is not investigated in the non-aqueous electrolyte secondary battery of Patent Literature 1, and there is still room for improvement of charge-discharge cycle characteristics.

A secondary battery of an aspect of the present disclosure is a non-aqueous electrolyte secondary battery comprising: a positive electrode; a negative electrode; and a non-aqueous electrolyte, wherein the positive electrode includes, as a positive electrode active material, a lithium-transition metal composite oxide having a layered structure and containing greater than or equal to 75 mol% of Ni relative to the total molar amount of metal elements excluding Li. The lithium-transition metal composite oxide is of secondary particles each formed by aggregation of primary particles, on an interface between the primary particles inside the secondary particles, at least one selected from the group consisting of Ca and Sr and at least one selected from the group consisting of W, Mo, Ti, Si, Nb, and Zr are present, and the negative electrode includes a silicon-containing material as a negative electrode active material.

The non-aqueous electrolyte secondary battery according to the present disclosure exhibits reduced decrease in the capacity with charge and discharge, and excellent charge-discharge cycle characteristics.

### BRIEF DESCRIPTION OF DRAWING

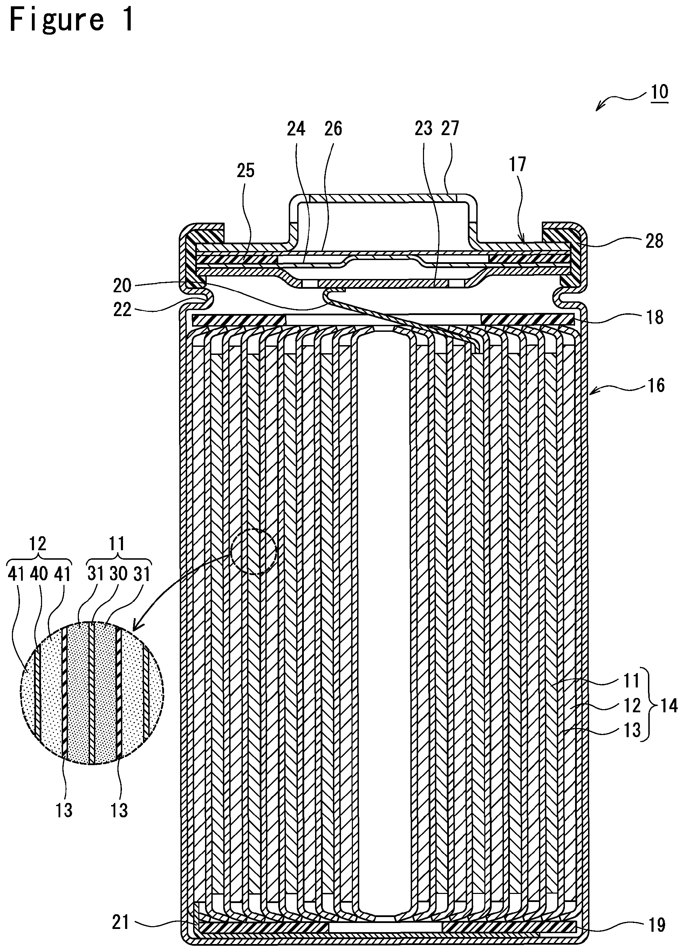

FIG. 1 is a view schematically illustrating an axial cross section of a non-aqueous electrolyte secondary battery (a cylindrical battery) of an example of an embodiment.

### DESCRIPTION OF EMBODIMENTS

The present inventors have found that decrease in the capacity with charge and discharge of the battery is specifically inhibited by allowing at least one selected from the group consisting of Ca and Sr and at least one selected from the group consisting of W, Mo, Ti, Si, Nb, and Zr to be present on an interface between primary particles inside secondary particles of a positive electrode active material, and by using at least a silicon-containing material as a negative electrode active material.

In the non-aqueous electrolyte secondary battery according to the present disclosure, ions having high reducing power generated by oxidative decomposition on the negative electrode including the silicon-containing material is considered to increase side reactions on the positive electrode, but it is presumed that a specific element such as Ca and Sr present on the surfaces of the primary particles of the positive electrode active material specifically inhibits these side reactions. According to this, for example, rise in resistance and elution of transition metals on the positive electrode are inhibited, resulting in remarkably improved charge-discharge cycle characteristics.

When the positive electrode active material having a high Ni content rate is used, a large amount of Ni⁴⁺, which has high reactivity, is present on the particle surface layer specifically in a high state of charge (SOC), thereby side reactions with the electrolyte easily occur, and a decomposed product may be deposited on the positive electrode or the transition metals may be eluted. Also, about this, the side reactions may be effectively inhibited by allowing the specific element such as Ca and Sr to be present on the surfaces of the primary particles of the positive electrode active material, and the reaction resistance derived from the positive electrode may be lowered.

Hereinafter, an example of embodiments of the non-aqueous electrolyte secondary battery according to the present disclosure will be described in detail with reference to the drawing. The scope of the present disclosure includes configurations composed of selective combinations of constitutional elements of a plurality of embodiments and modified examples described below.

In embodiments described below, a cylindrical battery 10 in which a wound electrode assembly 14 is housed in a bottomed cylindrical exterior housing can 16 will be exemplified, but the exterior body of the battery is not limited to the cylindrical exterior housing can. Examples of other embodiments of the non-aqueous electrolyte secondary battery according to the present disclosure include a rectangular battery comprising a rectangular exterior housing can, a coin battery comprising a coin-shaped exterior housing can, and a pouch battery comprising an exterior body constituted with laminated sheets including a metal layer and a resin layer. The electrode assembly is not limited to a wound electrode assembly, and may be a stacked electrode assembly in which a plurality of positive electrodes and a plurality of negative electrodes are alternately stacked via a separator.

FIG. 1 is a sectional view of a cylindrical battery 10 of an example of an embodiment. As illustrated in FIG. 1, the cylindrical battery 10 comprises the wound electrode assembly 14, an electrolyte, and the exterior housing can 16 housing the electrode assembly 14 and the electrolyte. The electrode assembly 14 has a positive electrode 11, a negative electrode 12, and a separator 13, and has a wound structure in which the positive electrode 11 and the negative electrode 12 are spirally wound via the separator 13. The exterior housing can 16 is a bottomed cylindrical metallic container having an opening portion on one end side in an axial direction, and the opening portion of the exterior housing can 16 is sealed with a sealing assembly 17. Hereinafter, for convenience of description, the sealing assembly 17 side of the battery will be described as the upper side, and the can bottom side of the exterior housing can 16 will be described as the lower side.

The non-aqueous electrolyte is not limited to the liquid electrolyte (electrolyte liquid) and may be a solid electrolyte, but the non-aqueous electrolyte liquid is used in the present embodiment. The non-aqueous electrolyte liquid includes a non-aqueous solvent and an electrolyte salt dissolved in the non-aqueous solvent. For the non-aqueous solvent, esters, ethers, nitriles, amides, and a mixed solvent of two or more thereof, and the like are used, for example. An example of the non-aqueous solvent is ethylene carbonate (EC), ethyl methyl carbonate (EMC), dimethyl carbonate (DMC), diethyl carbonate (DEC), a mixed solvent thereof, or the like. The non-aqueous solvent may contain a halogen-substituted derivative in which hydrogen of these solvents is at least partially replaced with a halogen atom such as fluorine (for example, fluoroethylene carbonate or the like). For the electrolyte salt, a lithium salt such as LiPF₆ is used, for example.

The positive electrode 11, the negative electrode 12, and the separator 13, which constitute the electrode assembly 14, are all a band-shaped elongated body, and spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction. The separators 13 are formed to be one size larger than at least the positive electrode 11, and two of them are disposed so as to sandwich the positive electrode 11, for example. The electrode assembly 14 has a positive electrode lead 20 connected to the positive electrode 11 by welding or the like and a negative electrode lead 21 connected to the negative electrode 12 by welding or the like.

Insulating plates 18 and 19 are respectively disposed on the upper and lower sides of the electrode assembly 14. In the example illustrated in FIG. 1, the positive electrode lead 20 extends through a through hole of the insulating plate 18 toward the sealing assembly 17 side, and the negative electrode lead 21 extends through the outside of the insulating plate 19 toward the bottom side of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding or the like, and the exterior housing can 16 becomes a negative electrode terminal.

A gasket 28 is provided between the exterior housing can 16 and the sealing assembly 17 to achieve sealability inside the battery. On the exterior housing can 16, a grooved portion 22 in which a part of a side surface portion thereof projects inward to support the sealing assembly 17 is formed. The grooved portion 22 is preferably formed in a circular shape along a circumferential direction of the exterior housing can 16, and supports the sealing assembly 17 with the upper face thereof. The sealing assembly 17 is fixed on the upper part of the exterior housing can 16 with the grooved portion 22 and with an end part of the opening of the exterior housing can 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at each of central parts thereof, and the insulating member 25 is interposed between the circumferential parts of the lower vent member 24 and the upper vent member 26. If the internal pressure of the battery increases due to abnormal heat generation, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through an opening portion of the cap 27.

Hereinafter, the positive electrode 11, the negative electrode 12, and the separator 13 specifically the positive electrode active material to constitute the positive electrode 11 and the negative electrode active material to constitute the negative electrode 12, will be described in detail.

### [Positive Electrode]

The positive electrode 11 has a positive electrode core 30 and a positive electrode mixture layer 31 provided on the positive electrode core 30. For the positive electrode core 30, a foil of a metal stable within a potential range of the positive electrode 11, such as aluminum, a film in which such a metal is disposed on a surface thereof, and the like may be used. The positive electrode mixture layer 31 includes a positive electrode active material, a binder, and a conductive auxiliary and is preferably provided on both surfaces of the positive electrode core 30 except for a portion where the positive electrode lead 20 is to be connected. The positive electrode 11 may be produced by, for example, applying a positive electrode mixture slurry including the positive electrode active material, the binder, the conductive auxiliary, and the like on surfaces of the positive electrode core 30, and drying and subsequently compressing the coating film to form the positive electrode mixture layer 31 on both the surfaces of the positive electrode core 30.

Examples of the conductive auxiliary included in the positive electrode mixture layer 31 include carbon materials such as carbon black such as acetylene black and Ketjenblack, graphite, carbon nanotube (CNT), carbon nanofiber, and graphene. Examples of the binder included in the positive electrode mixture layer 31 include fluorine-containing resins such as polytetrafluoroethylene (PTFE) and polyvinylidene fluoride (PVDF), polyacrylonitrile (PAN), a polyimide, an acrylic resin, and a polyolefin. These resins may be used in combination with carboxymethylcellulose (CMC) or a salt thereof, polyethylene oxide (PEO), and the like.

The positive electrode 11 includes, as the positive electrode active material, a lithium-transition metal composite oxide having a layered structure and containing greater than or equal to 75 mol% of Ni relative to the total molar amount of metal elements excluding Li. Although a detail will be described later, this lithium-transition metal composite oxide is of secondary particles each formed by aggregation of primary particles. On an interface between the primary particles inside the secondary particles, at least one selected from the group consisting of Ca and Sr and at least one selected from the group consisting of W, Mo, Ti, Si, Nb, and Zr are present.

The positive electrode active material contains the lithium-transition metal composite oxide (hereinafter, referred to as "the composite oxide (Z)") as a main component, and may be constituted with substantially only the composite oxide (Z). The positive electrode active material may include a composite oxide other than the composite oxide (Z) or other compounds within a range not impairing the object of the present disclosure. A content of the composite oxide (Z) is preferably greater than or equal to 50 mass%, and may be greater than or equal to 70 mass%, greater than or equal to 80 mass%, or substantially 100 mass% based on a total mass of the positive electrode active material.

The composite oxide (Z) has, for example, a layered rock-salt structure. Examples of the layered rock-salt structure include a layered rock-salt structure belonging to the space group R-3m and a layered rock-salt structure belonging to the space group C2/m. Among these, the layered rock-salt structure belonging to the space group R-3m is preferable from the viewpoints of increase in the capacity and stability of the crystal structure.

The composite oxide (Z) is of the secondary particles each formed by aggregation of the primary particles. A volume-based median diameter (D50) of the composite oxide (Z) is, for example, greater than or equal to 3 µm and less than or equal to 30 µm, and preferably greater than or equal to 5 µm and less than or equal to 25 µm. Since the composite oxide (Z) is of the secondary particles each formed by aggregation of the primary particles, the D50 of the composite oxide means D50 of the secondary particles. The D50 means a particle diameter at which a cumulative frequency is 50% from a smaller particle diameter side in volume-based particle size distribution. The particle size distribution of the composite oxide (Z) may be measured by using a laser diffraction-type particle size distribution measuring device (for example, MT3000II, manufactured by MicrotracBEL Corp.) with water as a dispersion medium. The particle size distribution of the positive electrode active material may be measured by using an image-type particle size distribution measuring device (for example, CAMSIZER X2, manufactured by MicrotracBEL Corp.) with water as a dispersion medium.

An average particle diameter of the primary particles constituting the composite oxide (Z) is, for example, greater than or equal to 0.02 µm and less than or equal to 1 µm, and preferably greater than or equal to 0.05 µm and less than or equal to 0.8 µm. The average particle diameter of the primary particles is calculated by measuring diameters of 100 circumscribed circles in the primary particles extracted by analyzing a scanning electron microscope (SEM) image of a cross section of the secondary particles photographed with the SEM, and averaging the measured values. The cross section of the secondary particles may be produced by a cross polisher (CP) method.

The composite oxide (Z) is, for example, a composite oxide represented by a general formula LiₓNiₐCo_{b}Mn_{c}Al_{d}M1ₑM2_{f}O_{2-y} (in the formula, 0.95 < x < 1.05, 0.75 ≤ a ≤ 0.95, 0 ≤ b ≤ 0.15, 0 ≤ c ≤ 0.25, 0 ≤ d ≤0.03, 0 < e ≤ 0.01, 0 < f ≤ 0.03, 0 ≤ y < 0.05, a+b+c+d+e+f = 1, M1 is at least one element selected from the group consisting of Ca and Sr, and M2 is at least one element selected from the group consisting of W, Mo, Ti, Si, Nb, and Zr). Content rates of the elements in the composite oxide (Z) may be measured with an inductively coupled plasma atomic emission spectrometer (ICP-AES), an electron probe micro analyzer (EPMA), or an energy dispersive X-ray analyzer (EDX).

The composite oxide (Z) preferably contains an amount of greater than or equal to 75 mol% of Ni relative to the total number of moles of metal elements excluding Li. Setting the content rate of Ni to be greater than or equal to 75 mol% yields the battery with high capacity, and the effect by adding the metal elements M1 and M2 becomes more remarkable. That is, a case of using the composite oxide (Z) with a high Ni content rate as the positive electrode active material causes a large amount of Ni⁴⁺, which has high reactivity, to be present on the particle surface layer, but it is considered that the effect by Ni⁴⁺ may be sufficiently reduced by the effect of the metal elements M1 and M2. The content rate of Ni may be greater than or equal to 80 mol%, or may be greater than or equal to 85 mol% relative to the total number of moles of the metal elements excluding Li. An upper limit of the content rate of Ni is, for example, 95 mol%.

The composite oxide (Z) preferably further contains at least one selected from the group consisting of Mn and Co. A preferable example of the composite oxide (Z) includes a lithium-nickel composite oxide containing Mn, a lithium-nickel composite oxide containing Mn and Co, or a lithium-nickel composite oxide containing Co and Al. When the composite oxide (Z) contains Mn, a content rate of Mn is preferably greater than or equal to 1 mol% and less than or equal to 25 mol%, and more preferably greater than or equal to 5 mol% and less than or equal to 20 mol% relative to the total number of moles of the metal elements excluding Li. In this case, both of high capacity and high durability of the battery are easily achieved.

When the composite oxide contains Co, a content rate of Co is preferably greater than or equal to 1 mol% and less than or equal to 15 mol%, and more preferably greater than or equal to 2 mol% and less than or equal to 7 mol% relative to the total number of moles of the metal elements excluding Li. In this case, both of high capacity and high durability are easily achieved while reducing the material cost. When the composite oxide (Z) contains Al, a content rate of Al is, for example, greater than or equal to 0.1 mol% and less than or equal to 5 mol% relative to the total number of moles of the metal elements excluding Li.

The composite oxide (Z) further contains the metal element M1 and the metal element M2 as the essential components. As noted above, the metal element M1 is at least one element selected from the group consisting of Ca and Sr, and the metal element M2 is at least one element selected from the group consisting of W, Mo, Ti, Si, Nb, and Zr. It is considered that adding a small amount of M1 and M2 into the composite oxide (Z) may inhibit the side reactions and the reaction resistance derived from the positive electrode may be reduced, and the charge-discharge cycle characteristics may be effectively improved. Note that adding only one of M1 and M2 cannot yield the sufficient effect.

The metal element M1 is present on at least an interface between the primary particles inside the secondary particles of the composite oxide (Z), and for example, present at a high density on the surfaces rather than the inside of the primary particles. M1 present on the surfaces of the primary particles may be confirmed by TEM-EDX and STEM-EDX. M1 is present in an evenly dispersed state on the interface between the primary particles, for example. Note that M1 may be adhered on the surfaces of the secondary particles (the surfaces of the primary particles present on the surfaces of the secondary particles).

Although the metal element M1 is effective at an extremely small amount, a lower limit of the content rate is preferably 0.05 mol%, and more preferably 0.1 mol% relative to the total number of moles of the metal elements excluding Li in the composite oxide (Z). The content rate of M1 is preferably less than or equal to 1 mol% relative to the total number of moles of the metal elements excluding Li. Even when greater than 1 mol% of M1 is added, the effect of improving the cycle characteristics is small or the cycle characteristics are rather deteriorated. Adding greater than 1 mol% of M1 leads to defects such as, for example, rise in resistance and decrease in the charge capacity.

The content rate of the metal element M1 is preferably greater than or equal to 0.05 mol% and less than or equal to 1 mol%, and more preferably greater than or equal to 0.1 mol% and less than or equal to 0.7 mol% or greater than or equal to 0.2 mol% and less than or equal to 0.5 mol%. When Ca and Sr are added as M1, a total of content rates thereof is preferably within the above range.

Although the metal element M2 is effective at an extremely small amount, a lower limit of the content rate is preferably 0.05 mol%, and more preferably 0.1 mol% relative to the total number of moles of the metal elements excluding Li in the composite oxide (Z). The content rate of M2 may be equal to the content rate of M1 or greater than the content rate of M1, and preferably less than or equal to 3 mol% relative to the total number of moles of the metal elements excluding Li. Even when greater than 3 mol% of M2 is added, the effect of improving the cycle characteristics is small or the cycle characteristics are rather deteriorated. Adding greater than 3 mol% of M2 leads to defects such as, for example, rise in resistance and decrease in the charge capacity.

The content rate of the metal element M2 is, for example, less than the content rate of Mn and greater than the content rate of M1. An example of the preferable content rate of M2 is greater than or equal to 0.05 mol% and 1 mol%, and more preferably greater than or equal to 0.2 mol% and less than or equal to 0.8 mol% or greater than or equal to 0.3 mol% and less than or equal to 0.7 mol%. When greater than or equal to two types of element are added as M2, a total of content rates thereof is preferably within the above range.

As noted above, the metal element M2 is at least one selected from the group consisting of W, Mo, Ti, Si, Nb, and Zr. Although all of these elements may be added to the composite oxide (Z), less than or equal to three types of the element are preferably added. Among these, W, Ti, Nb, and Zr are preferable. When two types of M2 are added, examples of preferable combinations of M2 include Nb and Zr, Nb and Ti, Nb and W, W and Ti, and W and Zr.

Similarly to the metal element M1, the metal element M2 is present, for example, on the interface between the primary particles inside the secondary particles of the composite oxide (Z), and present at a high density on the surfaces rather than the inside of the primary particles. M2 may form a solid solution together with the other metal elements such as Ni. An amount of the solid solution of M2 may be confirmed with an inductively coupled plasma atomic emission spectrometer (ICP-AES) or an energy dispersive X-ray spectrometry (EDS).

On the interface between the primary particles inside the secondary particles of the composite oxide (Z), a compound represented by a general formula M1_{α}M2_{β}O_{γ} is adhered (in the formula, 1 ≤ a ≤ 2, 1 ≤ β ≤ 5, 4 ≤ y ≤ 9, M1 is at least one element selected from the group consisting of Ca and Sr, and M2 is at least one element selected from the group consisting of W, Mo, Ti, Si, Nb, and Zr), for example. In this case, M1 and M2 are contained in the identical compound.

On the surfaces of the primary particles of the composite oxide (Z), at least one compound selected from the group consisting of the following first, second, and third compounds may be adhered. An example of the third compound is the compound represented by the general formula M1_{α}M2_{β}O_{γ}.

The first compound: A compound containing at least one selected from the group consisting of Ca and Sr.

The second compound: A compound containing at least one selected from the group consisting of W, Mo, Ti, Si, Nb, and Zr.

The third compound: A compound containing at least one selected from the group consisting of Ca and Sr and at least one selected from the group consisting of W, Mo, Ti, Si, Nb, and Zr.

The composite oxide (Z) may contain an element other than Li, Ni, Co, Mn, Al, M1, M2, and O. Examples of the other element include Cu, Mg, Na, K, Ba, Fe, B, P, and S. When the other element is contained, a content rate thereof is preferably less than or equal to 1 mol% relative to the total number of moles of the metal elements excluding Li.

The composite oxide (Z) may be synthesized by, for example, mixing and calcining an oxide containing at least Ni and preferably containing other metal elements such as Mn, Co, and Al, an M1 raw material, an M2 raw material, and a Li raw material. The calcined product is crushed, and then washed with water to obtain the composite oxide (Z). Note that the water-washing step may be omitted. An example of the Li raw material includes Li₂CO₃, LiOH, Li₂O₂, Li₂O, LiNO₃, LiNO₂, Li₂SO₄, LiOH·H₂O, LiH, and LiF. The oxide containing Ni and the like and the Li raw material are preferably mixed at a mole ratio so that a mole ratio between a total amount of the metal elements excluding Li in the oxide and Li in the Li raw material is, for example, greater than or equal to 1:0.98 and less than or equal to 1:1.12.

An example of the M1 raw material includes Ca(OH)₂, CaHPO₄, Ca(H₂PO₄)₂, Ca₃(PO₄)₂, CaO, CaCO₃, CaSO₄, Ca(NO₃)₂, CaCl₂, CaAlO₄, Sr(OH)₂, Sr(OH)₂·8H₂O, SrO, SrCO₃, SrSO₄, and Sr(NO₃)₂. An example of the M2 raw material includes Nb₂O₅, Nb₂O₅·nH₂O, WO₃, Li₂WO₄, TiO₂, Ti(OH)₄, ZrO₂, Zr(OH)₄, MoO₃, Li₂MoO₄, SiO, and SiO₂.

The calcining step of the mixture is, for example, a multi-stage calcining step including at least a first calcining step and a second calcining step at a higher temperature than in the first calcining step. The mixture is calcined under an oxygen atmosphere, and in this case, an oxygen concentration is set to be greater than or equal to 85%, for example. Although slightly varying depending on composition of the mixture, an example of the preferable first calcining temperature is greater than or equal to 500°C and less than or equal to 680°C. The preferable second calcining temperature is, for example, greater than or equal to 700°C and less than or equal to 850°C. The calcining steps preferably have a difference in temperature of greater than or equal to 50°C.

The calcining step is performed by feeding the mixture into a calcining furnace. The calcining step may include a plurality of temperature-raising steps having temperature-raising rate different from each other. For example, the temperature may be raised from room temperature to the first calcining temperature at a rate of greater than or equal to 1.0°C/min and less than or equal to 5.5°C/min (a first temperature-raising step), and the temperature may be raised from the first calcining temperature to the second calcining temperature at a rate of greater than or equal to 0.1°C/min and less than or equal to 3.5°C/min, which is lower than the first temperature-raising step (a second temperature-raising step). The temperature may be held at a highest reaching temperature in the calcining step for a predetermined time (for example, greater than or equal to 1 hour and less than or equal to 10 hours).

In the subsequent water-washing step, the calcined product obtained in the calcining step is washed with water and an impurity is removed, and the calcined product washed with water is dried with heating. The calcined product is crushed, classified, or the like as necessary to regulate D50 of the positive electrode active material within the target range. The calcined product after the water washing may be dried at a temperature of less than 100°C. An example of the preferable drying temperature is greater than or equal to 150°C and less than or equal to 250°C. The drying treatment may be performed in vacuo or under the atmosphere. An example of the time for the drying treatment is greater than or equal to 1 hour and less than or equal to 5 hours.

The composite oxide (Z) is obtained by precipitating (coprecipitating) a composite hydroxide containing Ni and the optional metal elements, and subjecting the composite hydroxide to a thermal treatment. This composite hydroxide may be synthesized by, for example, while stirring a solution of metal salts including Ni and the optional metal elements (Co, Al, Mn, M2, and the like), adding a solution of an alkali such as sodium hydroxide dropwise to adjust a pH on the alkaline side (for example, greater than or equal to 8.5 and less than or equal to 12.5). A particle diameter of the composite hydroxide tends to be smaller as the pH in the synthesis is higher. The particle diameter of the composite hydroxide may also be controlled by regulating an amount of the solution of the metal salts to be added, and a larger amount of the solution tends to yield a larger particle diameter, for example. The particle diameter of the composite oxide (Z) may be regulated by, for example, controlling the particle diameter of the composite hydroxide, which is the precursor. The temperature for the thermal treatment is not particularly limited, but within a range of greater than or equal to 250°C and less than or equal to 600°C, for example.

### [Negative Electrode]

The negative electrode 12 has a negative electrode core 40 and a negative electrode mixture layer 41 provided on the negative electrode core 40. For the negative electrode core 40, a foil of a metal stable within a potential range of the negative electrode 12, such as copper, a film in which such a metal is disposed on a surface thereof, and the like may be used. The negative electrode mixture layer 41 includes a negative electrode active material and a binder, and is preferably provided on both surfaces of the negative electrode core 40 except for a portion where the negative electrode lead 21 is to be connected. The negative electrode 12 may be produced by, for example, applying a negative electrode mixture slurry including the negative electrode active material and the binder on the surface of the negative electrode core 40, and drying and subsequently compressing the coating film to form the negative electrode mixture layer 41 on both the surfaces of the negative electrode core 40.

For the binder included in the negative electrode mixture layer 41, a fluororesin, PAN, a polyimide, an acrylic resin, a polyolefin, or the like may be used as in the case of the positive electrode 11, but styrene-butadiene rubber (SBR) is preferably used. The negative electrode mixture layer 41 preferably includes CMC or a salt thereof, polyacrylic acid (PAA) or a salt thereof, polyvinyl alcohol (PVA), or the like. Among these, SBR; and CMC or a salt thereof, or PAA or a salt thereof are preferably used in combination. A content rate of the binder is, for example, greater than or equal to 0.1 mass% and less than or equal to 5 mass% relative to the mass of the negative electrode mixture layer 41. The negative electrode mixture layer 41 may include a conductive auxiliary such as CNT.

The negative electrode 12 may include a silicon-containing material having a particle expansion coefficient of less than or equal to 230%. The silicon-containing material is included in the negative electrode mixture layer 41, and functions as the negative electrode active material that occludes and releases Li ions during charge and discharge of the battery. Use of the silicon-containing material having a particle expansion coefficient of less than or equal to 230% as the negative electrode active material inhibits increase in the oxidative decomposition reaction on the negative electrode, and consequently may improve the cycle characteristics of the battery. The particle expansion coefficient is controlled by composition, a particle diameter, a shape, a coarse/dense degree, and the like, for example.

With the non-aqueous electrolyte secondary battery 10 including the lithium-transition metal composite oxide in which at least one selected from the group consisting of Ca and Sr and at least one selected from the group consisting of W, Mo, Ti, Si, Nb, and Zr are present on the interface between the primary particles inside the secondary particles in the positive electrode 11, the cycle characteristics specifically change beyond the particle expansion coefficient of the silicon-containing material being 230%. When the particle expansion coefficient of the silicon-containing material is less than or equal to 230%, the cycle characteristics are remarkably improved. This specific effect is exhibited regardless of the content rate of the silicon-containing material, but becomes remarkable when the content rate of the silicon-containing material is less than or equal to 20 mass% based on the total mass of the negative electrode active material.

The particle expansion coefficient of the silicon-containing material herein is measured by the following method.
(1) The evaluation target battery is disassembled and a negative electrode plate is cut, and a single-pole cell in a state where a particle cross section of the silicon-containing material is exposed is produced by using metal Li as a counter electrode and an ionic liquid as an electrolyte liquid.
(2) Under a temperature environment at 25°C, the single-pole cell is charged at 0.002 C until a cell voltage reaches 5 mV, then discharged at 0.05 C until the cell voltage reaches 1.0 V, and a particle cross section of the silicon-containing material is observed in-situ with a SEM.
(3) A particle volume (V1) of the silicon-containing material in the charged state and a particle volume (V2) of the silicon-containing material in the discharged state are determined from change in a particle cross-sectional area of the silicon-containing material to calculate the particle expansion coefficient (V1×100/V2).

The particle expansion coefficient of the silicon-containing material may be less than or equal to 230% from the viewpoint of improving the cycle characteristics, but an excessively small particle expansion coefficient tends to decrease the battery capacity. Therefore, the particle expansion coefficient of the silicon-containing material is preferably greater than or equal to 150%. An example of the preferable range of the particle expansion coefficient is greater than or equal to 150% and less than or equal to 230%. The particle expansion coefficient of the silicon-containing material within the above range easily achieves both high capacity and excellent cycle characteristics.

As noted above, the negative electrode mixture layer 41 includes the silicon-containing material as the negative electrode active material. Since the silicon-containing material may occlude a large amount of Li ions compared with a carbon-based active material such as graphite, which is commonly used as the negative electrode active material, using the silicon-containing material may increase the capacity of the battery. The negative electrode active material preferably further includes a carbon material. That is, the negative electrode mixture layer 41 may include only the silicon-containing material as the negative electrode active material, but preferably includes the silicon-containing material and the carbon material.

A content rate of the silicon-containing material is preferably greater than or equal to 3 mass% and less than or equal to 20 mass% based on the total mass of the negative electrode active material. The content rate of the silicon-containing material within the above range easily achieves both high capacity and high durability of the battery. In addition, the effect by using the composite oxide (Z) as the positive electrode active material becomes more remarkable.

The carbon material that functions as the negative electrode active material is, for example, at least one selected from the group consisting of natural graphite, artificial graphite, soft carbon, and hard carbon. Among these, at least artificial graphite such as massive artificial graphite (MAG) or graphitized mesophase-carbon microbead (MCMB); natural graphite such as flake graphite, massive graphite, or amorphous graphite; or a mixture thereof is preferably used as the carbon material. A volume-based D50 of the carbon material is, for example, greater than or equal to 1 µm and less than or equal to 30 µm, and preferably greater than or equal to 5 µm and less than or equal to 25 µm.

The soft carbon and the hard carbon are classified as amorphous carbon in which a graphite crystal structure is not developed. More specifically, the amorphous carbon means a carbon content with a d(002) spacing by X-ray diffraction of greater than or equal to 0.342 nm. The soft carbon is also called as easily graphitized carbon, which is carbon easily graphitized by a high-temperature treatment compared with the hard carbon. The hard carbon is also called as hardly graphitized carbon. For the configuration of the present invention, the soft carbon and the hard carbon are not necessarily distinguished clearly. As the negative electrode active material, graphite; and the amorphous carbon of at least one of the soft carbon and the hard carbon may be used in combination.

The silicon-containing material may be any material as long as the material contains Si, and an example thereof includes a silicon alloy, a silicon compound, and a composite material containing Si. Among these, the composite material containing Si is preferable. D50 of the silicon-containing material is typically smaller than D50 of the graphite. The volume-based D50 of the silicon-containing material is, for example, greater than or equal to 1 µm and less than or equal to 20 µm, or greater than or equal to 1 µm and less than or equal to 15 µm. The silicon-containing material may be used singly, or may be used in combination of two or more thereof.

The preferable silicon-containing material (composite material) is of composite particles including an ion-conductive phase, and Si phases dispersed in the ion-conductive phase. The ion-conductive phase is, for example, at least one selected from the group consisting of a silicate phase, a carbon phase, a silicide phase, and a silicon oxide phase. The silicide phase is a phase of a compound composed of Si and an element more electrically positive than Si, and an example thereof includes NiSi, Mg₂Si, and TiSi₂. The Si phase is formed by Si dispersed as fine particles. The ion-conductive phase is a continuous phase constituted by aggregation of particles finer than the Si phase.

An average value of a size (a crystallite size) of the Si phase is preferably greater than or equal to 1 nm and less than or equal to 200 nm, and more preferably greater than or equal to 1 nm and less than or equal to 50 nm. The average value of the size of the Si phase is calculated from a half-value width of a diffraction peak attributed to a Si (111) plane (2θ = near 28.4°) in an XRD pattern by using a formula of D = kλ/Bcosθ (k = 0.89, λ = 0.15418, 2θ = 28.4°, and B is a full width at half maximum). The average size of the Si phase may be, for example, greater than or equal to 1 nm and less than or equal to 10 nm. Reducing the size of the Si phase may reduce the particle expansion coefficient with charge and discharge while keeping high capacity.

The composite material may have a conductive layer covering a surface of the ion-conductive phase. The conductive layer is constituted with a material having higher conductivity than the ion-conductive layer, and forms a good conductive path in the negative electrode mixture layer 41. The conductive layer is, for example, a carbon coating constituted with a conductive carbon material. As the conductive carbon material, carbon black such as acetylene black and Ketjenblack, graphite, formless carbon having low crystallinity (amorphous carbon), and the like may be used. A thickness of the conductive layer is preferably greater than or equal to 1 nm and less than or equal to 200 nm, or greater than or equal to 5 nm and less than or equal to 100 nm with considering achievement of conductivity and diffusibility of Li ions toward the inside of the particles. The thickness of the conductive layer may be measured by observing a cross section of the composite material using a SEM or a transmission electron microscope (TEM).

The ion-conductive phase may include at least one selected from the group consisting of group I elements and group II elements of the periodic table. The ion-conductive layer may be a Li-doped silicon oxide phase. The ion-conductive phase may contain at least one element selected from the group consisting of B, Al, Zr, Nb, Ta, V, La, Y, Ti, P, Bi, Zn, Sn, Pb, Sb, Co, Er, F, and W.

An example of the preferable composite material containing Si is of composite particles that have a sea-island structure in which fine Si is substantially uniformly dispersed in an amorphous silicon oxide phase, and that is represented entirely by the general formula SiOₓ (0 < x ≤ 2). The main component of silicon oxide may be silicon dioxide. The silicon oxide phase may be doped with Li. A content ratio (x) of oxygen to Si is, for example, 0.5 ≤ x < 2.0, and preferably 0.8 ≤ x ≤ 1.5.

Another example of the preferable composite material containing Si includes composite particles having a sea-island structure in which fine Si is substantially uniformly dispersed in an amorphous silicate phase. A preferable silicate phase is a lithium silicate phase containing Li. The lithium silicate phase is, for example, a phase of a composite oxide represented by the general formula Li_{2z}SiO_{(2+z)} (0 < z < 2). The lithium silicate phase preferably does not include Li₄SiO₄ (Z=2). Li₄SiO₄, which is an unstable compound, reacts with water and exhibits alkalinity, and therefore may modify Si, resulting in deterioration of the charge-discharge capacity. The lithium silicate phase preferably contains Li₂SiO₃ (Z=1) or Li₂Si₂O₅ (Z=1/2) as a main component from the viewpoints of stability, productivity, Li-ion conductivity, and the like.

Another example of a preferable composite material containing Si is of composite particles having a sea-island structure in which fine Si is substantially uniformly dispersed in a carbon phase. The carbon phase is preferably an amorphous carbon phase. The carbon phase may include a crystalline phase component, but preferably includes more amorphous phase component than the crystalline phase component. The composite material may include particles in which the ion-conductive phase is the carbon phase being amorphous. The amorphous carbon phase is constituted with, for example, a carbon material having greater than 0.34 nm of an average spacing of a (002) face measured by X-ray diffraction. The composite material including the carbon phase may have a conductive layer different from the carbon phase, or may not have the conductive layer.

### [Separator]

For the separator 13, a porous sheet having an ion permeation property and an insulation property is used. Specific examples of the porous sheet include a microporous thin film, a woven fabric, and a nonwoven fabric. As a material for the separator 13, a polyolefin such as polyethylene or polypropylene, cellulose, or the like is preferable. The separator 13 may have a single-layered structure or a multi-layered structure. On a surface of the separator 13, a highly heat-resistant resin layer such as an aramid resin, may be formed.

On an interface between the separator 13 and at least one of the positive electrode 11 and the negative electrode 12, a filler layer including an inorganic filler may be formed. Examples of the inorganic filler include oxides containing a metal element such as Ti, Al, Si, and Mg, and a phosphoric acid compound. The filler layer may be formed by applying a slurry containing the filler on the surface of the positive electrode 11, the negative electrode 12, or the separator 13.

### EXAMPLES

Hereinafter, the present disclosure will be further described with Examples, but the present disclosure is not limited to these Examples.

### <Example 1>

### [Synthesis of Lithium-Transition Metal Composite Oxide]

A composite hydroxide containing Ni, Co, and Mn was synthesized by a coprecipitation method, and subjected to a thermal treatment at 400°C to obtain a composite oxide. This oxide, lithium hydroxide, and calcium hydroxide as a raw material of a metal element M1, and niobium pentoxide and titanium oxide as raw materials of a metal element M2 were mixed so that a mole ratio (a Li/Me ratio) between the metal elements (Me) in the composite oxide and Li in lithium hydroxide was 1:1.040.

This mixture was fed into a calcining furnace, and subjected to a three-stage calcining. In the calcining step, the temperature was raised under an oxygen flow with an oxygen concentration of 95% (a flow rate of 2 mL/min per 10 cm² and 5 L/min per kilogram of the mixture) at a temperature-raising rate of 2°C/min from room temperature to 500°C. Thereafter, the mixture was calcined at a temperature-raising rate of 1.5°C/min from 500°C to 680°C, and at a temperature-raising rate of 1°C/min from 680°C to 750°C, and then the temperature was held at 750°C for 3 hours. This calcined product was crushed, then washed with water, and then dried in vacuo at 170°C to obtain a lithium-transition metal composite oxide.

The obtained lithium-transition metal composite oxide was analyzed by ICP-AES, and as a result, relative to a total amount of the metal elements excluding Li, a content rate of Ni was 89.9 mol%, a content rate of Co was 3.0 mol%, a content rate of Mn was 6.0 mol%, a content rate of Ca was 0.4 mol%, a content rate of Nb was 0.2 mol%, and a content rate of Ti was 0.5 mol%. A volume-based D50 of the composite oxide measured by using MT3000II, manufactured by MicrotracBEL Corp., with water as a dispersion medium was 12 µm. It was confirmed from an SEM image that the composite oxide was of secondary particles each formed by aggregation of primary particles, and it was confirmed by TEM-EDX that Ca, Nb, and Ti were present on surfaces of the primary particles.

### [Production of Positive Electrode]

The above lithium-transition metal composite oxide was used as a positive electrode active material. This positive electrode active material, acetylene black, and polyvinylidene fluoride (PVdF) were mixed at a solid-content mass ratio of 98:1:1, and N-methyl-2-pyrrolidone (NMP) was used as a dispersion medium to prepare a positive electrode mixture slurry. This positive electrode mixture slurry was applied on both surfaces of a positive electrode core composed of aluminum foil, the coating film was dried and then rolled by using a roller, and cut to a predetermined electrode size to produce a positive electrode in which a positive electrode mixture layer was formed on both the surfaces of the positive electrode core. At a part of the positive electrode, an exposed portion where the surface of the positive electrode core was exposed was provided.

### [Production of Negative Electrode]

As a negative electrode active material, a silicon-containing material represented by SiOₓ (0 < x ≤ 2) and natural graphite were mixed at a mass ratio of 3:97 to be used. On particle surfaces of the silicon-containing material, a carbon coating was formed. This negative electrode active material, sodium carboxymethylcellulose (CMC-Na), and a dispersion of styrene-butadiene rubber (SBR) were mixed at a solid-content mass ratio of 100: 1: 1, and water was used as a dispersion medium to prepare a negative electrode mixture slurry. This negative electrode mixture slurry was applied on both surfaces of a negative electrode core composed of copper foil, the coating film was dried, then the coating film was rolled by using a roller, and cut to a predetermined electrode size to obtain a negative electrode in which a negative electrode mixture layer was formed on both the surfaces of the negative electrode core. At a part of the negative electrode, an exposed portion where the surface of the negative electrode core was exposed was provided.

### [Preparation of Non-Aqueous Electrolyte Liquid]

Into a mixed solvent in which ethylene carbonate (EC), methyl ethyl carbonate (MEC), and dimethyl carbonate (DMC) were mixed at a volume ratio (25°C) of 3:3:4, LiPF₆ was dissolved at a concentration of 1.2 mol/L to prepare a non-aqueous electrolyte liquid.

### [Production of Test Cell (Non-Aqueous Electrolyte Secondary Battery)]

An aluminum lead was attached to the exposed portion of the positive electrode, and a nickel lead was attached to the exposed portion of the negative electrode. The positive electrode and the negative electrode were spirally wound via a separator made of a polyolefin to produce a wound electrode assembly. This electrode assembly was housed in a bottomed cylindrical exterior housing can, the non-aqueous electrolyte liquid was injected thereinto, and then an opening portion of the exterior housing can was sealed with a sealing assembly to obtain a test cell.

### <Example 2>

A test cell was produced in the same manner as in Example 1 except that, in the synthesis of the lithium-transition metal composite oxide, calcium hydroxide and strontium hydroxide were added as the raw materials of the metal element M1 so that a content rate of Ca was 0.3 mol% and a content rate of Sr was 0.2 mol%, and zirconium oxide was added as the metal element M2 so that a content rate of Zr was 0.4 mol%.

### <Example 3>

A test cell was produced in the same manner as in Example 1 except that, in the synthesis of the lithium-transition metal composite oxide, calcium hydroxide was added as the raw material of the metal element M1 so that a content rate of Ca was 0.2 mol%, and tungsten oxide was added as the metal element M2 so that a content rate of W was 0.4 mol%.

### <Comparative Example 1>

A test cell was produced in the same manner as in Example 1 except that, in the synthesis of the lithium-transition metal composite oxide, the raw material of the metal element M1 and the raw materials of the metal element M2 were not added.

### <Example 4>

A composite hydroxide containing Ni, Co, Mn, and Al was synthesized by a coprecipitation method, and subjected to a thermal treatment at 400°C to obtain a composite oxide. Calcium hydroxide was used as a raw material of a metal element M1, and niobium pentoxide and zirconium oxide were used as raw materials of a metal element M2. As a negative electrode active material, the silicon-containing material and the natural graphite, which were used in Example 1, were mixed at a mass ratio of 6:94 to be used. A test cell was produced in the same manner as in Example 1 except for the above points. The obtained lithium-transition metal composite oxide was analyzed by ICP-AES, and as a result, relative to a total amount of the metal elements excluding Li, a content rate of Ni was 89.2 mol%, a content rate of Co was 3.0 mol%, a content rate of Mn was 6.0 mol%, a content rate of Al was 1.0 mol%, a content rate of Ca was 0.4 mol%, a content rate of Nb was 0.2 mol%, and a content rate of Zr was 0.2 mol%.

### <Example 5>

A test cell was produced in the same manner as in Example 4 except that, in the synthesis of the lithium-transition metal composite oxide, calcium hydroxide was added as the raw material of the metal element M1 so that a content rate of Ca was 0.3 mol%, and zirconium oxide was added as the metal element M2 so that a content rate of Zr was 0.4 mol%.

### <Example 6>

A test cell was produced in the same manner as in Example 4 except that, in the synthesis of the lithium-transition metal composite oxide, calcium hydroxide and strontium hydroxide were added as the raw materials of the metal element M1 so that a content rate of Ca was 0.2 mol% and a content rate of Sr was 0.1 mol%, and tungsten oxide was added as the metal element M2 so that a content rate of W was 0.4 mol%.

### <Comparative Example 2>

A test cell was produced in the same manner as in Example 4 except that, in the synthesis of the lithium-transition metal composite oxide, the raw material of the metal element M1 and the raw materials of the metal element M2 were not added.

### <Comparative Example 3>

A test cell was produced in the same manner as in Example 5 except that, in the synthesis of the lithium-transition metal composite oxide, the raw material of the metal element M2 was not added.

### <Comparative Example 4>

A test cell was produced in the same manner as in Example 5 except that, in the synthesis of the lithium-transition metal composite oxide, the raw material of the metal element M1 was not added.

### <Example 7>

A composite hydroxide containing Ni and Mn was synthesized by a coprecipitation method, and subjected to a thermal treatment at 400°C to obtain a composite oxide. Calcium hydroxide was used as a raw material of a metal element M1, and niobium pentoxide and zirconium oxide were used as raw materials of a metal element M2. As a negative electrode active material, the silicon-containing material and the natural graphite, which were used in Example 1, were mixed at a mass ratio of 20:80 to be used. A test cell was produced in the same manner as in Example 1 except for the above points. The obtained lithium-transition metal composite oxide was analyzed by ICP-AES, and as a result, relative to a total amount of the metal elements excluding Li, a content rate of Ni was 90.0 mol%, a content rate of Mn was 9.0 mol%, a content rate of Ca was 0.4 mol%, a content rate of Nb was 0.2 mol%, and a content rate of Zr was 0.4 mol%.

### <Example 8>

A test cell was produced in the same manner as in Example 7 except that, in the synthesis of the lithium-transition metal composite oxide, calcium hydroxide and strontium hydroxide were added as the raw materials of the metal element M1 so that a content rate of Ca was 0.4 mol% and a content rate of Sr was 0.2 mol%, and tungsten oxide was added as the metal element M2 so that a content rate of W was 0.4 mol%.

### <Comparative Example 5>

A test cell was produced in the same manner as in Example 7 except that, in the synthesis of the lithium-transition metal composite oxide, the raw material of the metal element M1 and the raw materials of the metal element M2 were not added.

### <Example 9>

A composite hydroxide containing Ni, Co, and Mn was synthesized by a coprecipitation method, and subjected to a thermal treatment at 400°C to obtain a composite oxide. Calcium hydroxide was used as a raw material of a metal element M1, and niobium pentoxide and zirconium oxide were used as raw materials of a metal element M2. As a negative electrode active material, only the silicon-containing material in Example 1 was used. A test cell was produced in the same manner as in Example 1 except for the above points. The obtained lithium-transition metal composite oxide was analyzed by ICP-AES, and as a result, relative to a total amount of the metal elements excluding Li, a content rate of Ni was 90.2 mol%, a content rate of Co was 3.0 mol%, a content rate of Mn was 6.0 mol%, a content rate of Ca was 0.4 mol%, a content rate of Nb was 0.2 mol%, and a content rate of Zr was 0.2 mol%.

### <Example 10>

A test cell was produced in the same manner as in Example 9 except that, in the synthesis of the lithium-transition metal composite oxide, calcium hydroxide and strontium hydroxide were added as the raw materials of the metal element M1 so that a content rate of Ca was 0.4 mol% and a content rate of Sr was 0.1 mol%, and zirconium oxide was added as the metal element M2 so that a content rate of Zr was 0.4 mol%.

### <Comparative Example 6>

A test cell was produced in the same manner as in Example 9 except that, in the synthesis of the lithium-transition metal composite oxide, the raw material of the metal element M1 and the raw materials of the metal element M2 were not added.

The capacity retention after charge-discharge cycles of each of the test cells of Examples and Comparative Examples was calculated. Table 1 to Table 4 respectively show the evaluation results. The evaluation results shown in Table 1 are values relative to a value of the test cell of Comparative Example 1 being 100. The evaluation results shown in Table 2 are values relative to a value of the test cell of Comparative Example 2 being 100. The evaluation results shown in Table 3 are values relative to a value of the test cell of Comparative Example 5 being 100. The evaluation results shown in Table 4 are values relative to a value of the test cell of Comparative Example 6 being 100.

### [Measurement of Capacity Retention (Evaluation of Cycle Characteristics)]

Under a temperature environment at 25°C, the test cell was charged at a constant current of 0.2 It until a cell voltage reached 4.2 V, and charged at a constant voltage of 4.2 V until a current value reached 1/50 It. Thereafter, the test cell was discharged at a constant current of 0.2 It until the cell voltage reached 2.5 V. This charge-discharge cycle was repeated 100 times, and a discharge capacity at the 100th cycle was divided by a discharge capacity at the 1st cycle to determine the capacity retention after the cycle test.

**[Table 1]**

| | Composition of lithium-transition metal composite oxide [mol%] | | | | | | Negative electrode | Capacity retention [%] |
|---|---|---|---|---|---|---|---|---|
| | Ni | Co | Mn | Al | M1 | M2 | Proportion of silicon-containing material [mass%] | |
| Example 1 | 89.9 | 3 | 6 | 0 | Ca 0.4 | Nb 0.2 | 3 | 106 |
| | | | | | | Ti 0.5 | | |
| Example 2 | 90.1 | 3 | 6 | 0 | Ca 0.3 | Zr 0.4 | 3 | 106 |
| | | | | | Sr 0.2 | | | |
| Example 3 | 90.4 | 3 | 6 | 0 | Ca 0.2 | W 0.4 | 3 | 104 |
| Comparative Example 1 | 91 | 3 | 6 | 0 | - | - | 3 | 100 |

**[Table 2]**

| | Composition of lithium-transition metal composite oxide [mol%] | | | | | | Negative electrode | Capacity retention [%] |
|---|---|---|---|---|---|---|---|---|
| | Ni | Co | Mn | Al | M1 | M2 | Proportion of silicon-containing material [mass%] | |
| Example 4 | 89.2 | 3 | 6 | 1 | Ca 0.4 | Nb 0.2 | 6 | 105 |
| | | | | | | Zr 0.2 | | |
| Example 5 | 89.3 | 3 | 6 | 1 | Ca 0.3 | Zr 0.4 | 6 | 105 |
| Example 6 | 89.3 | 3 | 6 | 1 | Ca 0.2 | W 0.4 | 6 | 104 |
| | | | | | Sr 0.1 | | | |
| Comparative Example 2 | 90 | 3 | 6 | 1 | - | - | 6 | 100 |
| Comparative Example 3 | 89.7 | 3 | 6 | 1 | Ca 0.3 | - | 6 | 102 |
| Comparative Example 4 | 89.6 | 3 | 6 | 1 | - | Zr 0.4 | 6 | 101 |

**[Table 3]**

| | Composition of lithium-transition metal composite oxide [mol%] | | | | | | Negative electrode | Capacity retention [%] |
|---|---|---|---|---|---|---|---|---|
| | Ni | Co | Mn | Al | M1 | M2 | Proportion of silicon-containing material [mass%] | |
| Example 7 | 90 | 0 | 9 | 0 | Ca 0.4 | Nb 0.2 | 20 | 104 |
| | | | | | | Zr 0.4 | | |
| Example 8 | 90 | 0 | 9 | 0 | Ca 0.4 | W 0.4 | 20 | 103 |
| | | | | | Sr 0.2 | | | |
| Comparative Example 5 | 91 | 0 | 9 | 0 | - | - | 20 | 100 |

**[Table 4]**

| | Composition of lithium-transition metal composite oxide [mol%] | | | | | | Negative electrode | Capacity retention [%] |
|---|---|---|---|---|---|---|---|---|
| | Ni | Co | Mn | Al | M1 | M2 | Proportion of silicon-containing material [mass%] | |
| Example 9 | 90.2 | 3 | 6 | 0 | Ca 0.4 | Nb 0.2 | 100 | 102 |
| | | | | | | Zr 0.2 | | |
| Example 10 | 90.1 | 3 | 6 | 0 | Ca 0.4 | Zr 0.4 | 100 | 102 |
| | | | | | Sr 0.1 | | | |
| Comparative Example 6 | 91 | 3 | 6 | 0 | - | - | 100 | 100 |

As shown in Table 1 to Table 4, the test cells of Examples exhibited high capacity retention after the cycle test compared with the test cells of Comparative Examples in any cases of the proportion of the silicon-containing material in the negative electrode active material, and had excellent charge-discharge cycle characteristics. As obvious from Comparative Examples 3 and 4, the case where only one of the metal elements M1 and M2 is added into the lithium-transition metal composite oxide cannot yield the sufficient effect of improving the cycle characteristics. Adding both the metal elements M1 and M2 specifically improves the cycle characteristics.

The present disclosure will be further described with the following embodiments.

Constitution 1: A non-aqueous electrolyte secondary battery, comprising: a positive electrode; a negative electrode; and a non-aqueous electrolyte, wherein the positive electrode includes, as a positive electrode active material, a lithium-transition metal composite oxide having a layered structure and containing greater than or equal to 75 mol% of Ni relative to a total molar amount of metal elements excluding Li, the lithium-transition metal composite oxide is of secondary particles each formed by aggregation of primary particles, on an interface between the primary particles inside the secondary particles, at least one selected from the group consisting of Ca and Sr and at least one selected from the group consisting of W, Mo, Ti, Si, Nb, and Zr are present, and the negative electrode includes a silicon-containing material as a negative electrode active material.

Constitution 2: The non-aqueous electrolyte secondary battery according to Constitution 1, wherein the lithium-transition metal composite oxide is a composite oxide represented by a general formula LiₓNiₐCo_{b}Mn_{c}AlₐM1ₑM2_{f}O_{2-y}, wherein 0.95 < x < 1.05, 0.75 ≤ a ≤ 0.95, 0 ≤ b ≤ 0.15, 0 ≤ c ≤ 0.25, 0 ≤ d ≤ 0.03, 0 < e ≤ 0.01, 0 < f ≤ 0.03, 0 ≤ y < 0.05, a+b+c+d+e+f = 1, M1 is at least one element selected from the group consisting of Ca and Sr, and M2 is at least one element selected from the group consisting of W, Mo, Ti, Si, Nb, and Zr.

Constitution 3: The non-aqueous electrolyte secondary battery according to Constitution 1 or 2, wherein, on the interface between the primary particles inside the secondary particles, a compound represented by a general formula M1_{α}M2_{β}O_{γ} is adhered, wherein 1 ≤ α ≤ 2, 1 ≤ β ≤ 5, 4 ≤ y ≤ 9, M1 is at least one element selected from the group consisting of Ca and Sr, and M2 is at least one element selected from the group consisting of W, Mo, Ti, Si, Nb, and Zr.

Constitution 4: The non-aqueous electrolyte secondary battery according to any one of Constitutions 1 to 3, wherein the negative electrode active material further includes a carbon material, and the carbon material is at least one selected from the group consisting of natural graphite, artificial graphite, soft carbon, and hard carbon.

Constitution 5: The non-aqueous electrolyte secondary battery according to Constitution 4, wherein a content rate of the silicon-containing material is greater than or equal to 3 mass% and less than or equal to 20 mass% based on a total mass of the negative electrode active material.

Constitution 6: The non-aqueous electrolyte secondary battery according to any one of Constitutions 1 to 5, wherein the silicon-containing material includes an ion-conductive phase and Si phases dispersed in the ion-conductive phase, and the ion-conductive phase is at least one selected from the group consisting of a silicate phase, a carbon phase, a silicide phase, and a silicon oxide phase.

Constitution 7: The non-aqueous electrolyte secondary battery according to Constitution 6, wherein the ion-conductive phase includes at least one element selected from the group consisting of a group I element and a group II element of a periodic table.

Constitution 8: The non-aqueous electrolyte secondary battery according to Constitution 7, wherein the ion-conductive phase further contains at least one element selected from the group consisting of B, Al, Zr, Nb, Ta, V, La, Y, Ti, P, Bi, Zn, Sn, Pb, Sb, Co, Er, F, and W.

Constitution 9: The non-aqueous electrolyte secondary battery according to any one of Constitutions 6 to 8, wherein the silicon-containing material includes particles in which the ion-conductive phase is the carbon phase being amorphous.

### REFERENCE SIGNS LIST

10 Secondary battery, 11 Positive electrode, 12 Negative electrode, 13 Separator, 14 Electrode assembly, 16 Exterior housing can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket, 30 Positive electrode core, 31 Positive electrode mixture layer, 40 Negative electrode core, 41 Negative electrode mixture layer

## Claims

1. A non-aqueous electrolyte secondary battery, comprising:
a positive electrode;
a negative electrode; and
a non-aqueous electrolyte, wherein
the positive electrode includes, as a positive electrode active material, a lithium-transition metal composite oxide having a layered structure and containing greater than or equal to 75 mol% of Ni relative to a total molar amount of metal elements excluding Li,
the lithium-transition metal composite oxide is of secondary particles each formed by aggregation of primary particles,
on an interface between the primary particles inside the secondary particles, at least one selected from the group consisting of Ca and Sr and at least one selected from the group consisting of W, Mo, Ti, Si, Nb, and Zr are present, and
the negative electrode includes a silicon-containing material as a negative electrode active material.

2. The non-aqueous electrolyte secondary battery according to claim 1, wherein the lithium-transition metal composite oxide is a composite oxide represented by a general formula LiₓNiₐCo_{b}Mn_{c}AlₐM1ₑM2_{f}O_{2-y}, wherein 0.95 < x < 1.05, 0.75 ≤ a ≤ 0.95, 0 ≤ b ≤ 0.15, 0 ≤ c ≤ 0.25, 0 ≤ d ≤ 0.03, 0 < e ≤ 0.01, 0 < f ≤ 0.03, 0 ≤ y < 0.05, a+b+c+d+e+f = 1, M1 is at least one element selected from the group consisting of Ca and Sr, and M2 is at least one element selected from the group consisting of W, Mo, Ti, Si, Nb, and Zr.

3. The non-aqueous electrolyte secondary battery according to claim 1, wherein, on the interface between the primary particles inside the secondary particles, a compound represented by a general formula M1_{α}M2_{β}O_{γ} is adhered, wherein 1 ≤ α ≤ 2, 1 ≤ β ≤ 5, 4 ≤ y ≤ 9, M1 is at least one element selected from the group consisting of Ca and Sr, and M2 is at least one element selected from the group consisting of W, Mo, Ti, Si, Nb, and Zr.

4. The non-aqueous electrolyte secondary battery according to claim 1, wherein
the negative electrode active material further includes a carbon material, and
the carbon material is at least one selected from the group consisting of natural graphite, artificial graphite, soft carbon, and hard carbon.

5. The non-aqueous electrolyte secondary battery according to claim 4, wherein a content rate of the silicon-containing material is greater than or equal to 3 mass% and less than or equal to 20 mass% based on a total mass of the negative electrode active material.

6. The non-aqueous electrolyte secondary battery according to claim 1, wherein
the silicon-containing material includes an ion-conductive phase and Si phases dispersed in the ion-conductive phase, and
the ion-conductive phase is at least one selected from the group consisting of a silicate phase, a carbon phase, a silicide phase, and a silicon oxide phase.

7. The non-aqueous electrolyte secondary battery according to claim 6, wherein the ion-conductive phase includes at least one element selected from the group consisting of a group I element and a group II element of a periodic table.

8. The non-aqueous electrolyte secondary battery according to claim 6, wherein the ion-conductive phase contains at least one element selected from the group consisting of B, Al, Zr, Nb, Ta, V, La, Y, Ti, P, Bi, Zn, Sn, Pb, Sb, Co, Er, F, and W.

9. The non-aqueous electrolyte secondary battery according to claim 6, wherein the silicon-containing material includes particles in which the ion-conductive phase is the carbon phase being amorphous.
